# EUROPEAN PATENT SPECIFICATION

(11) **EP 1 102 354 B1**
(45) Date of publication and mention of the grant of the patent: **28.05.2008**
(21) Application number: 00310224.1
(22) Date of filing: 17.11.2000
(51) Int. Cl.: H01R 12/08, H01R 13/52

(54) **Apparatus for contacting foil conductors, in particular of a solar module**
Vorrichtung zur Verbindung von Leiterfolien, insbesondere von einem Solarmodul
Dispositif pour contacter des conducteurs à feuille, en particulier d'un module solaire

(30) Priority: 17.11.1999 EP 99122852
(43) Date of publication of application: 23.05.2001
(73) Proprietor: Tyco Electronics AMP GmbH, 63225 Langen bei Ffm. (DE)
(72) Inventor: Bock, Werner, 64823 Gross-Umstadt (DE); Gotz, Klaus-Peter, 64653 Lorsch (DE); Feldmeier, Gunter, 64653 Lorsch (DE); Scherer, Heinz, 64625 Benszheim (DE); Szelag, Martin, 64404 Bickenbach (DE); Wober, Andreas, 76709 Kronau (DE)
(74) Representative: Warren, Keith Stanley

(56) References cited:
- WO-A-98/25325
- DE-A- 2 256 657
- DE-U- 29 706 750
- DE-U- 29 906 707
- GB-A- 2 260 864
- US-A- 4 460 232
- US-A- 5 947 760

## Description

The invention relates to an apparatus for making contact with foil conductors, in particular those of a solar module, having a housing, a first connecting region for connecting to the foil conductors and a second connecting region with at least one contact for connecting to at least one plug connector.

US-A-4460232 discloses a junction box for a solar module which comprises a dielectric housing mounted on the module over tabs connected to respective bus bars of the module. The housing includes a pair of integral dielectric receptacle members having terminal members therein with planar blade portions which are engaged by plug members inserted in the receptacles. The terminals each have planar bus terminating portions parallel to floor of housing and projecting over an aperture in floor which receives the tabs therethrough.

WO-A-98/25325 discloses a device for corrosion-resistant and reliable connection of one or more electrical conductors to solar elements which are fixed on roofings or facades. This is achieved by means of an oval rotatable element which, upon rotation, simultaneously opens two spring clamps of a connecting element which, itself, is configured as a connector or a socket. The shape of the connecting element excludes any false polarization. The connections can be easily detached and reestablished from the top of the solar element by using a screw driver.

To make contact with a solar module or solar panel it can be necessary to make contact with foil conductors that are usually guided between two glass sheets. In many applications, the foil conductors emerge through a hole in the two glass sheets and it is necessary to produce a connection, which is sealed against water spray, at this round connection point. It is normal in this case for the thickness of the glass sheets with the hole to vary, for example, between three and five millimetres.

It is known to fill the opening in the glass sheet with a sealing compound and to apply and glue thereto a housing of the apparatus for making contact with the foil conductors. The disadvantage of this process is that the labour input is very high and sealing only achieves a seal against the glass sheets. Different glass thicknesses lead to varying installation conditions.

It is an object of the invention to provide an apparatus for making contact with foil conductors, in particular of a solar module, that is constructed particularly simply and expediently.

This object is achieved by an apparatus as set forth in claim 1 hereof. Advantageous details are given in the dependent claims.

As a result of the design of the apparatus according to the invention, it is possible to connect the foil conductors to conductor rails which are connected to a contact or terminal area in the second connecting region of the apparatus for connecting it to at least one plug connector or cable. The feature of the contact region of the conductor rail having a clamping spring for clamping the foil conductor between the clamping spring and the conductor rail enables the foil conductor to be very easily fastened to the apparatus. Consequently, a simple contacting of the solar module is achieved.

It is also particularly advantageous to close the housing with a diaphragm cover. As a result, variations in pressure inside the housing due to varying external temperatures or a varying external pressure, can be compensated.

It is also particularly advantageous that the diaphragm cover is connected securely to the housing. This is achieved by the diaphragm cover being joined to the housing by a strap hinge. As the diaphragm cover is made of a flexible material, different from the material of the housing, the hinge is connected to the housing via a latching connection.

It is also particularly advantageous that the diaphragm cover simultaneously seals and closes the housing of the apparatus. This is achieved as the diaphragm cover has a sealing lip which engages in a corresponding groove of the housing.

It is also particularly advantageous that the diaphragm cover is easy to open. This is achieved by an opening aid that is provided into which a tool can be inserted so that the cover can be easily opened by lever action of the tool.

It is also particularly advantageous that protection is provided to prevent touching of the current-carrying contacts. This is achieved through an intermediate cover that is provided and arranged between the housing and the cover to cover the conductor rails. It is also particularly advantageous that the terminal areas for receiving electronic modules are accessible when the intermediate cover is inserted.

It is also particularly advantageous that the housing is filled to the intermediate cover with sealing compound.

It is also particularly advantageous that the intermediate cover can not be detached from the housing after sealing. This is achieved by the latching hook of the intermediate cover by which this intermediate cover is fastened to the housing so that it is also sealed. This measure ensures that once the apparatus has been fastened to a solar panel no further manipulation is possible.

It is also advantageous to make the sealing compound easy to insert. This is achieved by a sealing funnel that is provided on the intermediate cover.

It is also particularly advantageous that the foil conductors are very easy to fasten. This is achieved in that the contact regions of the conductor rails have clamping springs which enable the foil conductors to be clamped between the clamping springs and the conductor rail.

It is also particularly advantageous that it is possible to glue the housing onto the glass plate of the solar panel. This is achieved by having the first connecting region arranged on the housing base.

It is also particularly advantageous that the correct position of the housing on the solar panel can be assured by the aid of the housing. For this purpose, a centring ring is provided on the first connecting region for centring the housing in the recess of the upper glass plate of the solar module.

It is also particularly advantageous that a seal is provided between the solar module and the connecting region of the housing to assure a seal against water spray and enable adaptation for various glass thicknesses. A seal of this type can be achieved by means of a gel seal.

It is particularly advantageous that the gel seal can be applied into a recess of the solar panel. This is achieved as the gel seal consists of a carrier element and a gel element. This can also be achieved in that the gel seal consists of two partial seals between which the foil conductors can extend.

It is also particularly advantageous that an adjusting spring having stored energy is provided to compress the gel seal for a lengthy period of time after the apparatus has been applied to the solar panel. This is achieved by the first connecting region including spring elements that exert pressure on the gel element.

It is also particularly advantageous to provide screw terminal connectors that allow direct connection of the cables within the apparatus.

It is also particularly advantageous that the conductor rails of the system can be connected to one another as desired, whereby the apparatus can be adapted to the use of the solar module. This is achieved as each conductor rail has at least one terminal area for making contact with conductor portions or diodes.

With the apparatus according to the invention, the foil conductors can reliably be contacted and the housing is sealed against water spray. The apparatus also has high thermal stability and is weather-proof against UV radiation and ozone.

It is also particularly advantageous that the electronic modules, for example diodes, in the apparatus can easily be exchanged.

Embodiments of the invention will be described hereinafter with reference to the drawings, in which:
Figure 1 is a partially cut-away upper perspective view of a first embodiment of an apparatus for making contact with foil conductors having an opened diaphragm cover and intermediate cover;
Figure 2 is a lower perspective view of the first connecting region of the apparatus shown in Figure 1;
Figure 3 is a further perspective view of the first embodiment of the apparatus with intermediate cover and diode inserted;
Figure 4 is a perspective view of a second embodiment of an apparatus according to the invention with an opened diaphragm cover;
Figure 5 is a perspective view from the housing base of the embodiment of Figure 4;
Figure 6 is a schematic drawing of a solar panel with foil conductors and gel seal;
Figure 7 is a schematic view of a solar panel with foil conductors and partially inserted gel seal;
Figure 8 is a top view of the apparatus according to Figure 7;
Figure 9 is a schematic side view of a further stage during insertion of the gel seal into a solar panel according to Figure 7;
Figure 10 is a top view of the apparatus according to Figure 9;
Figure 11 is a cross-section through a solar panel with the first connecting region of the apparatus applied;
Figure 12 is a perspective view of an apparatus with screw terminal areas with opened diaphragm cover; and
Figure 13 is a perspective view of an apparatus according to the invention with six conductor rails.

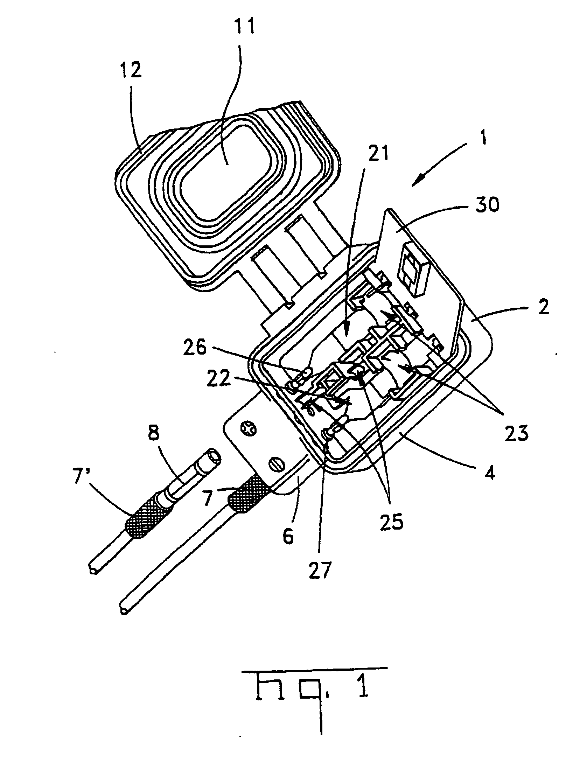

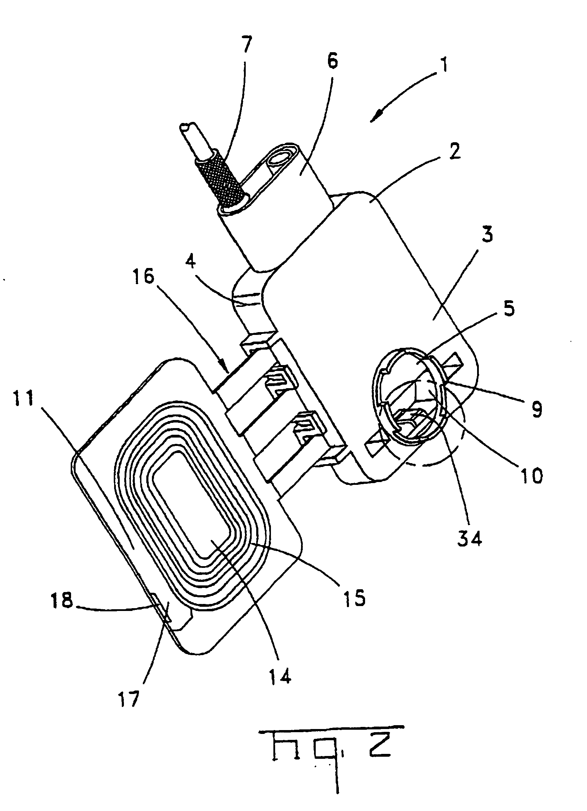

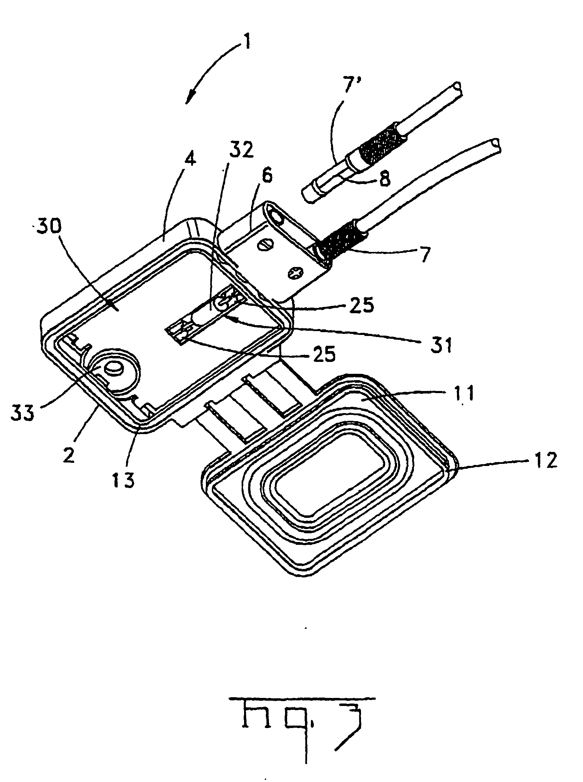

A first embodiment of an apparatus 1 according to the invention is shown in Figures 1, 2 and 3. The drawings show various perspective views of the apparatus 1 according to the invention for making contact with foil conductors, in particular of a solar module. The apparatus 1 consists of a housing 2 with a housing base 3 and lateral walls 4.

The housing 2 has two connecting regions, a first connecting region 5, which is provided in the housing base 3 for making contact with the solar module and a second connecting region 6 which is provided in one of the lateral walls 4 of the housing and is designed for connecting with at least one plug connector 7. As can be seen from the figures, two plug connectors 7 and 7' can be connected at the second connecting region 6. The two female connectors 7 and 7' have coding ribs 8 for distinguishing the plug connectors for plus potential and minus potential. The actual female contact is located inside the female connector 7, 7' in a safe-to-touch manner. By virtue of the coded socket housing it is not possible to mis-mate the female connectors 7, 7'. In the plugged state, the plugged connection between the second connecting region and the female connectors 7, 7' is sealed against water spray.

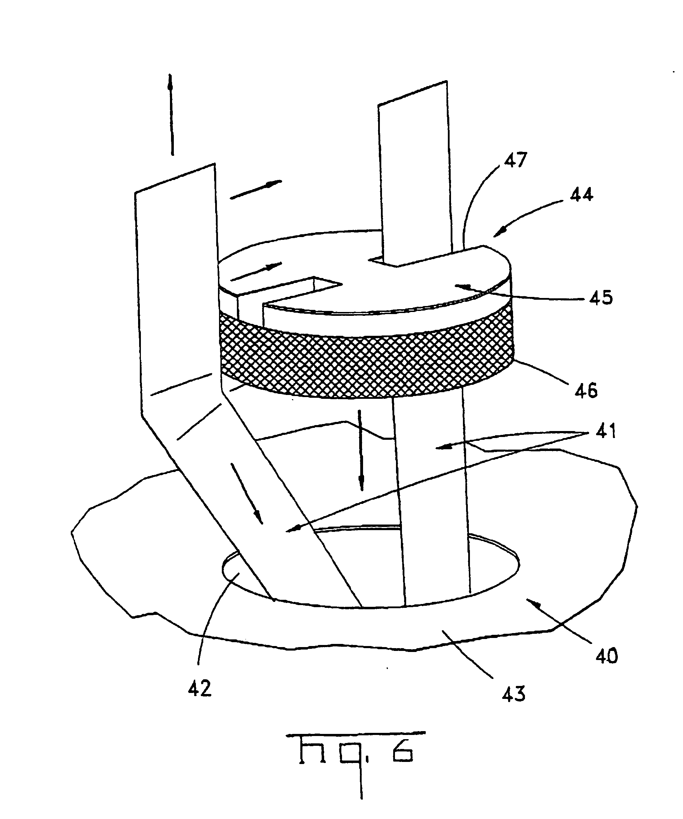

The first connecting region 5 is arranged on the housing base 3. It has a centring ring 9 which is used for centring the connecting region 5 and therefore the housing 2 in an opening (see Figure 6, reference 42) in a glass sheet of a solar module. The first connecting region 5 has an opening 10 in the housing base 3 within the centring ring 9. The foil conductors are inserted into the housing 2 through this opening 10.

A diaphragm cover 11 is provided on the housing 2. This diaphragm cover 11 has a peripheral sealing ring 12. The sealing ring 12 engages in a corresponding sealing groove 13 of the housing 2 when the diaphragm cover 11 is closed. In addition, the diaphragm cover 11 has, in the central region, a diaphragm 14 which, due to an undulating design of the material in the region 15 surrounding the diaphragm is easily moveable relative to the cover 11. If the diaphragm cover 11 is closed, it closes off the housing 2 in a sealing manner with the sealing lip 12. Due to temperature variations or corresponding changes in the ambient pressure, pressure in the interior of the housing can then be compensated with the aid of the diaphragm 14. The membrane cover has a hinge 16 in the form of three hinge straps. The diaphragm cover 11 is supported on the housing 2 by means of the hinge 16. As the diaphragm cover 11 is often produced from a different material as the housing 2, it can be connected to the housing 2 in a latching manner in the region of the hinges.

The diaphragm cover 11 also has an opening aid 17 into which a tool can be inserted into an undercut 18 so that with the help of the tool, the diaphragm cover 11 can be opened.

Two conductor rails 21 and 22 are located in the housing 2 of the apparatus according to the invention and according to the first embodiment. The conductor rails 21 and 22 each have a contact region 23 for detachable connection to a foil conductor. The contact regions 23 consist of metallic clamping springs that allow clamping of the foil conductors between the clamping springs and conductor rails 21, 22. Reliable contacting of the foil conductors is thus ensured by the use of purely metallic contact elements. In addition, contacting is achieved by energy stores in the clamping springs.

The conductor rails 21, 22 also have, in each case, a terminal area 25 for receiving electronic modules or lead portions. The two terminal areas 25 are arranged opposite to one another so they can receive, for example, the lead portions of a diode. Each conductor rail 21, 22 is also connected to a contact 26 of the second connecting region 6. The contacts 26 are surrounded by an inner seal 27 which ensures the sealing of the contact to the housing.

Between the housing 2 and the diaphragm cover 11, an intermediate cover 30 is provided. This intermediate cover 30 has a plurality of recesses 31 which serve to expose the terminal areas 25 through the intermediate cover 30. It is thus possible that even when the intermediate cover 30 is closed, an electronic component, for example a diode 32, can be inserted and is accessible.

The intermediate cover 30 also has a sealing funnel 33. By means of this sealing funnel 33, the space between the intermediate cover 30 and the housing 2 can be filled with a sealing compound.

In addition, the intermediate cover 30 has a latching lever 34 for latching on the housing 2. When the space between the intermediate cover 30 and the housing 2 is filled with sealing compound, the latching lever 34 is also sealed and the intermediate cover 30 can no longer be opened without destroying the apparatus.

If an apparatus according to the invention as shown in Figures 1 to 3 is applied to a solar panel, a seal is initially provided on the solar panel and the foil conductors are then inserted through the opening 10 of the first connecting region 5 into the housing 2. The housing 2 is glued with the housing base 3 onto the glass of the solar panel. The foil conductors are contacted by means of the clamping springs of the contact regions 23 with the conductor rails 21, 22. The intermediate cover 30 is then closed and the apparatus, already glued to the solar module, is sealed. A diode can then be inserted and the cover 11 of the apparatus closed. Contacting of the solar module is now possible with the plug connectors 7, 7'.

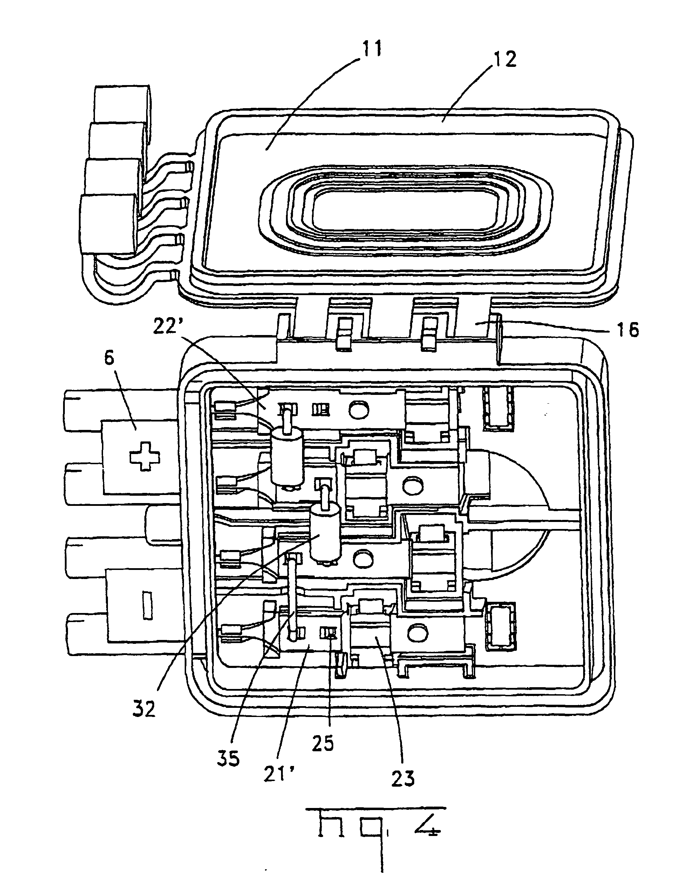

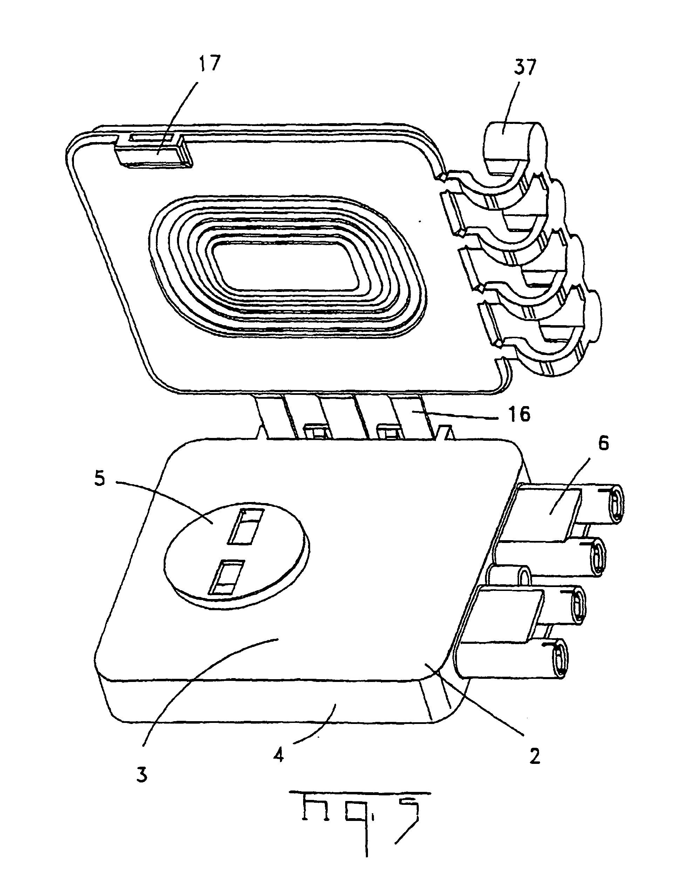

Figures 4 and 5 now show a second embodiment of the apparatus according to the invention. This embodiment essentially differs from the first embodiment in that not only two foil conductors but four foil conductors can be connected. In this apparatus, moreover, there is no intermediate cover.

Each conductor rail has one or more terminal areas 25' for receiving and making contact with conductor ends, for example a diode 32 or a conductor portion 35. The conductor rails 21' and 22' also have a contact region 23 with a metallic clamping spring.

The diaphragm cover 11 is also substantially designed to correspond to the diaphragm cover of the first embodiment. It has a peripheral sealing lip 12, a hinge 16 and an opening aid 17. The diaphragm cover 11 also has covering caps 37 for covering the second connecting region 6, or the plug connector receivers of the second connecting region.

A first possible design of a seal on the solar module 40 will now be described with the aid of Figure 6. The solar module 40 has two foil conductors 41 which are to be guided through an opening 42 in the upper glass plate 43 of the solar module out of the solar module and into the apparatus. To seal the opening 42 a gel seal 44 is provided which is adapted in shape to the opening 42. The gel seal 44 consists of a carrier element 45 and the gel element 46 carried by the carrier element 45. The carrier element 45 has two slots 47 for receiving the foil conductors 41. The solar module can be optimally sealed by means of the gel seal 44.

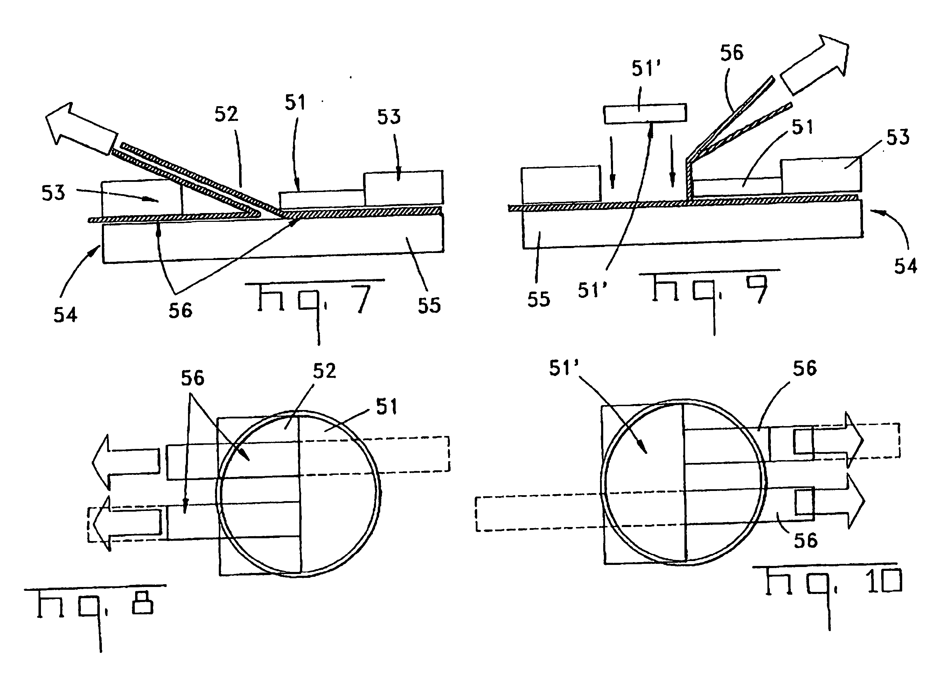

The insertion of a second gel seal will now be described with the aid of Figures 7 to 10. The second gel seal consists of two semicircular elements 51, 51', which are inserted into a semicircular opening 52 in a glass plate 53 of a solar panel 54. Two foil conductors 56 are located between the two glass plates 53 and 55 of the solar panel. These foil conductors 56 are initially bent in a first direction to insert the first partial seal 51. The two foil conductors 56 are then bent over the partial seal 51 to insert the second partial seal 51'. An optimal seal is also achieved with this type of gel seal from two partial seals 51, 52.

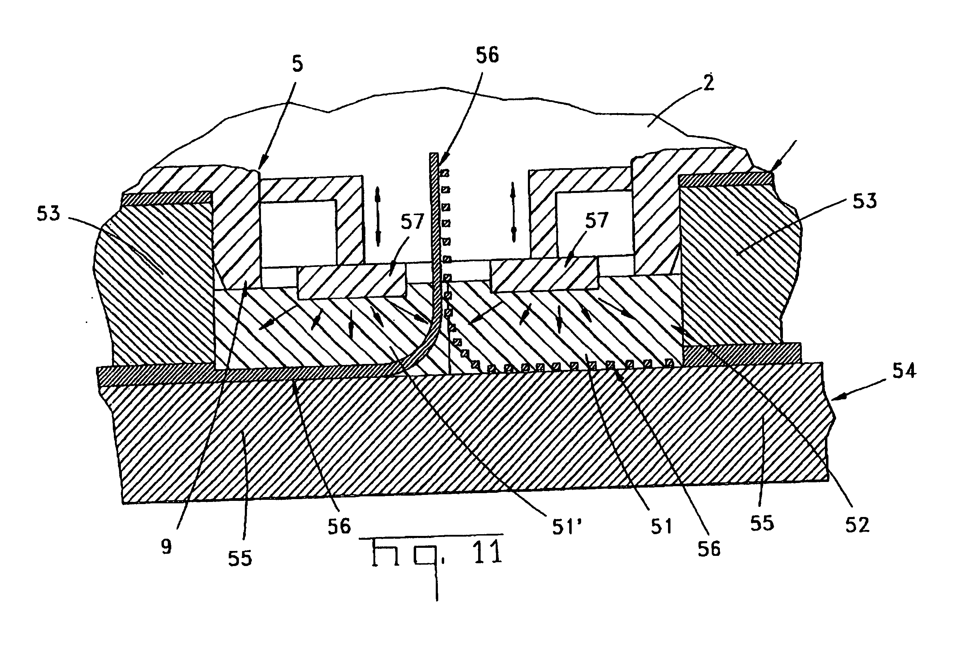

With the aid of Figure 11, it will now be explained how a constant pressure is exerted on the gel seal to ensure the integrity of the seal. Figure 11 shows a cross-section though a solar module 54 with a first glass plate 55 and a second glass plate 53. Two foil conductors 56 pass through the opening 52 in the second glass plate 53. The opening 52 is sealed by means of two partial seals 51 and 51'. An apparatus according to the invention is applied to the solar module 54. Only a part of the housing 2 can be seen. A cross-section through the first connecting region 5 with the centring ring 9 is shown. To exert a pressure on the partial seals 51, 51' of the gel seal, spring elements 57 are provided in the first connecting region 5 which are connected to the first connecting region and spring-load perpendicularly to the extension of the glass plates. Pressure is thus exerted on the gel seal and the sealing effect is ensured.

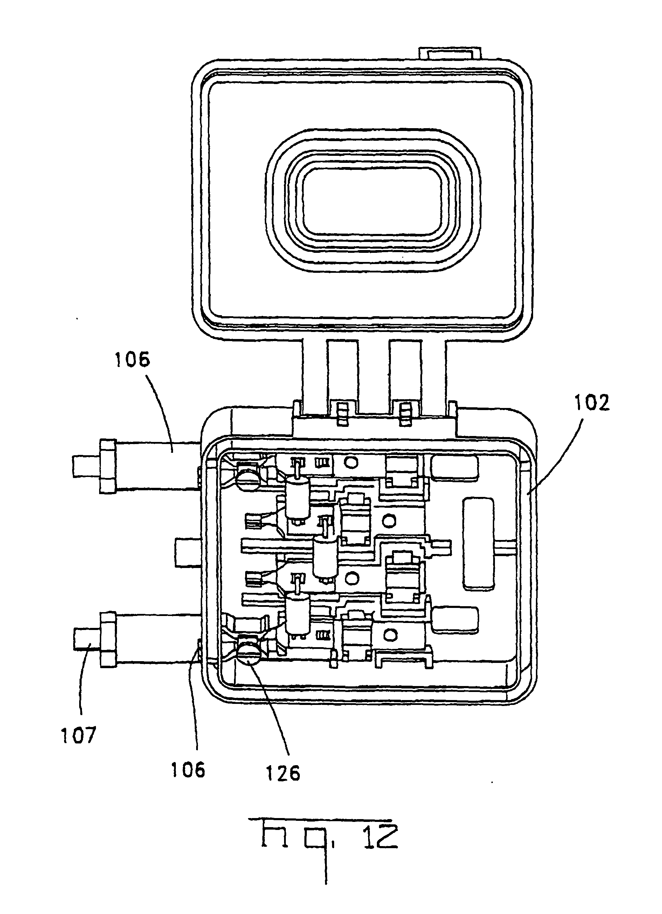

Figure 12 shows a perspective view of an apparatus with an opened diaphragm cover which differs from Figure 4 in that two screw terminal areas 126 are provided for making contact with a cable 107 in each case. In addition to the use of screw terminal areas, the use of spring-loaded terminals is also possible.

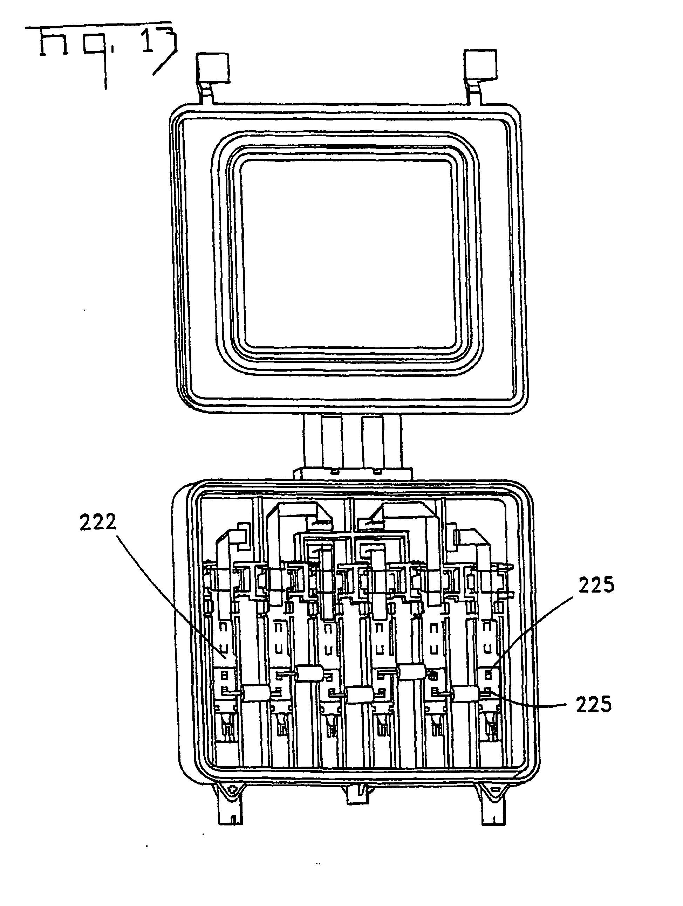

Figure 13 shows an apparatus according to the invention with six conductor rails 222. The conductors rails 222 have two terminal areas 225 in each case and can be connected to one another thereby as desired.

## Claims

1. An apparatus for making contact with a foil conductor (56), in particular, of a solar module (54), comprising:
a housing (2, 102) having a first connecting region (5) including an opening (10) in the housing base (3) for insertion of the foil conductor, and a second connecting region (6, 106) with at least one contact (26) for connecting to at least one plug connector (7, 7'), or with a terminal area (126) for making contact with at least one cable (107), and
at least one conductor rail (21, 22) connecting the contact (26) or the terminal area (126) to a contact region (23) of the conductor rail for detachable connection to the foil conductor, the conductor rail (21, 22) having a terminal area (25) for receiving electronic modules or lead portions, **characterized in that**
the first connecting region (5) includes a centring ring (9) for centring the first connecting region in an opening (42,52) in the solar module through which the foil conductor (56) extends, said base opening (10) being within the centring ring, and the contact region (23) has a clamping spring that clamps the foil conductor (56) between the clamping spring and the conductor rail.

2. The apparatus according to claim 1 wherein the housing (2) can be closed by a diaphragm cover (11).

3. The apparatus according to claim 2, wherein the diaphragm cover (11) is joined to the housing (2) by a hinge (16).

4. The apparatus according to claim 2 or 3, wherein the diaphragm cover (11) closes the housing (2) in a sealing manner with a sealing lip (12).

5. The apparatus according to claim 2, 3 or 4, wherein the diaphragm cover (11) has an opening aid (17) in the form of an undercut for inserting a tool.

6. The apparatus according to claim 2, 3, 4 or 5, wherein a covering cap (37) is joined to the diaphragm cover (11) for covering the second connecting region (6)

7. The apparatus according to any preceding claim 2 to 6, wherein an intermediate cover (30) is provided between the housing (2) and the diaphragm cover (11).

8. The apparatus according to claim 7, wherein the housing (2) is filled to the intermediate cover (30) with sealing compound.

9. The apparatus according to claims 7 or 8, wherein the intermediate cover (30) latches on the housing (2).

10. The apparatus according to claim 7, 8 or 9, wherein the terminal areas (25) of the conductor rails (21, 22) are also accessible when the intermediate cover (30) is closed.

11. The apparatus according to claim 7, 8, 9 or 10, wherein the intermediate cover (30) has a sealing funnel (33).

12. The apparatus according to any preceding claim, wherein a gel seal (44, 51, 51') is provided between the solar module (54) and the first connecting region (5).

13. The apparatus according to claim 12, wherein the gel seal (44) consists of a carrier element (45) and a gel element (46).

14. The apparatus according to claim 13, wherein the gel seal consists of two partial seals (51, 51') between which the foil conductors (56) extend.

15. The apparatus according to claim 12, 13, or 14 wherein the first connecting region (5) has spring elements which exert a pressure on the gel seal.

16. The apparatus according to any preceding claim, wherein the terminal area (126) for making contact with said at least one cable (107) is designed as a screw terminal area.

17. The apparatus according to any preceding claim 1 to 16, wherein the terminal area (126) for making contact with said at least one cable (107) is designed as a spring-loaded terminal area.

## Patentansprüche

1. Vorrichtung zur Herstellung eines Kontaktes mit einer Leiterfolie (56), insbesondere von einem Solarmodul (54), die aufweist:
ein Gehäuse (2, 102) mit einem ersten Verbindungsbereich (5), der eine Öffnung (10) in der Gehäusebasis (3) für das Einsetzen der Leiterfolie umfasst, und einem zweiten Verbindungsbereich (6, 106) mit mindestens einem Kontakt (26) für das Verbinden mit mindestens einem Steckverbinder (7, 7') oder einer Kontaktstelle (126) für das Herstellen eines Kontaktes mit mindestens einem Kabel (107); und
mindestens eine Stromschiene (21, 22), die den Kontakt (26) oder die Kontaktstelle (126) mit einem Kontaktbereich (23) der Stromschiene für eine lösbare Verbindung mit der Leiterfolie verbindet, wobei die Stromschiene (21, 22) eine Kontaktstelle (25) für das Aufnehmen von elektronischen Modulen oder Leitungsabschnitten aufweist, **dadurch gekennzeichnet, dass**
der erste Verbindungsbereich (5) einen Zentrierring (9) für das Zentrieren des ersten Verbindungsbereiches in einer Öffnung (42, 52) im Solarmodul umfasst, durch die sich die Leiterfolie (56) erstreckt, wobei die Basisöffnung (10) innerhalb des Zentrierringes liegt, und der Kontaktbereich (23) eine Klemmfeder aufweist, die die Leiterfolie (56) zwischen der Klemmfeder und der Stromschiene festklemmt.

2. Vorrichtung nach Anspruch 1, bei der das Gehäuse (2) durch eine Membranabdeckung (11) geschlossen werden kann.

3. Vorrichtung nach Anspruch 2, bei der die Membranabdeckung (11) mit dem Gehäuse (2) mittels eines Scharniers (16) verbunden ist.

4. Vorrichtung nach Anspruch 2 oder 3, bei der die Membranabdeckung (11) das Gehäuse (2) in einer abdichtenden Weise mit einer Dichtlippe (12) verschließt.

5. Vorrichtung nach Anspruch 2, 3 oder 4, bei der die Membranabdeckung (11) eine Öffnungshilfe (17) in der Form eines Unterschnittes für das Einsetzen eines Werkzeuges aufweist.

6. Vorrichtung nach Anspruch 2, 3, 4 oder 5, bei der eine Abdeckkappe (37) mit der Membranabdeckung (11) für das Abdecken des zweiten Verbindungsbereiches (6) verbunden ist.

7. Vorrichtung nach einem der vorhergehenden Ansprüche 2 bis 6, bei der eine Zwischenabdeckung (30) zwischen dem Gehäuse (2) und der Membranabdeckung (11) vorhanden ist.

8. Vorrichtung nach Anspruch 7, bei der das Gehäuse (2) zur Zwischenabdeckung (30) mit einer Dichtmasse gefüllt ist.

9. Vorrichtung nach Anspruch 7 oder 8, bei der die Zwischenabdeckung (30) am Gehäuse (2) einklinkt.

10. Vorrichtung nach Anspruch 7, 8 oder 9, bei der die Kontaktstellen (25) der Stromschienen (21, 22) ebenfalls zugänglich sind, wenn die Zwischenabdeckung (30) geschlossen ist.

11. Vorrichtung nach Anspruch 7, 8, 9 oder 10, bei der die Zwischenabdeckung (30) einen Dichtungstrichter (33) aufweist.

12. Vorrichtung nach einem der vorhergehenden Ansprüche, bei der eine Geldichtung (44, 51, 51') zwischen dem Solarmodul (54) und dem ersten Verbindungsbereich (5) vorhanden ist.

13. Vorrichtung nach Anspruch 12, bei der die Geldichtung (44) aus einem Trägerelement (45) und einem Gelelement (46) besteht.

14. Vorrichtung nach Anspruch 13, bei der die Geldichtung aus zwei Teildichtungen (51, 51') besteht, zwischen denen sich die Leiterfolien (56) erstrecken.

15. Vorrichtung nach Anspruch 12, 13 oder 14, bei der der erste Verbindungsbereich (5) Federelemente aufweist, die einen Druck auf die Geldichtung ausüben.

16. Vorrichtung nach einem der vorhergehenden Ansprüche, bei der die Kontaktstelle (126) für das Verbinden mit dem mindestens einen Kabel (107) als eine Schraubkontaktstelle konstruiert ist.

17. Vorrichtung nach einem der vorhergehenden Ansprüche 1 bis 16, bei der die Kontaktstelle (126) für das Verbinden mit dem mindestens einen Kabel (107) als eine federbelastete Kontaktstelle konstruiert ist.

## Revendications

1. Dispositif pour établir un contact avec un conducteur à feuille (58), en particulier un module solaire (54), comprenant:
un boîtier (2, 102), comportant une première région de connexion (5) englobant une ouverture (10) dans la base du boîtier (3) en vue de l'insertion du conducteur à feuille, et une deuxième région de connexion (6, 106), avec au moins un contact (26) en vue de la connexion à au moins un connecteur à fiche (7, 7'), ou avec une zone de raccordement (126) pour établir un contact avec au moins un câble (107) ; et
au moins un rail conducteur (21, 22) assurant la connexion du contact (26) ou de la zone de raccordement (126) à une région de contact (23) du rail conducteur en vue d'une connexion détachable au conducteur à feuille, le rail conducteur (21, 22) comportant une zone de raccordement (25) pour recevoir des modules électroniques ou des parties conductrices, **caractérisé en ce que**
la première région de connexion (5) englobe une bague de centrage (9) pour centrer la première région de connexion dans une ouverture (42, 52) dans le module solaire, à travers laquelle s'étend le conducteur à feuille (56), ladite ouverture de base (10) étant située à l'intérieur de la bague de centrage et la région de contact (23) comportant un ressort de serrage serrant le conducteur à feuille (56) entre le ressort de serrage et le rail conducteur.

2. Dispositif selon la revendication 1, dans lequel le boîtier (2) peut être fermé par un couvercle à membrane (11).

3. Dispositif selon la revendication 2, dans lequel le couvercle à membrane (11) est relié au boîtier (2) par une charnière (16).

4. Dispositif selon les revendications 2 ou 3, dans lequel le couvercle à membrane (11) assure la fermeture étanche du boîtier (2) par une lèvre d'étanchéité (12).

5. Dispositif selon les revendications 2, 3 ou 4, dans lequel le couvercle à membrane (11) comporte une aide à l'ouverture (17) sous forme d'une entaille en vue de l'insertion d'un outil.

6. Dispositif selon les revendications 2, 3, 4 ou 5, dans lequel un capuchon de couverture (37) est relié au couvercle à membrane (11) pour recouvrir la deuxième région de connexion (6).

7. Dispositif selon l'une quelconque des revendications 2 à 6, dans lequel un couvercle intermédiaire (30) est agencé entre le boîtier (2) et le couvercle à membrane (11).

8. Dispositif selon la revendication 7, dans lequel le boîtier (2) est rempli d'un composé d'étanchéité jusqu'au niveau du couvercle intermédiaire (30).

9. Dispositif selon les revendications 7 ou 8, dans lequel le couvercle intermédiaire (30) est verrouillé sur le boîtier (2).

10. Dispositif selon les revendications 7, 8 ou 9, dans lequel les zones de raccordement (25) des rails conducteurs (21, 22) sont également accessibles lorsque le couvercle intermédiaire (30) est fermé.

11. Dispositif selon les revendications 7, 8, 9 ou 10, dans lequel le couvercle intermédiaire (30) comporte un entonnoir d'étanchéité (33).

12. Dispositif selon l'une quelconque des revendications précédentes, dans lequel un joint à gel (44, 51, 51') est agencé entre le module solaire (54) et la première région de connexion (5).

13. Dispositif selon la revendication 12, dans lequel le joint à gel (44) est constitué par un élément de support (45) et un élément de gel (46).

14. Dispositif selon la revendication 13, dans lequel le joint à gel est constitué par deux joints partiels (51, 51'), entre lesquels s'étendent les conducteurs à feuille (56).

15. Dispositif selon les revendications 12, 13 ou 14, dans lequel la première région de connexion (5) comporte des éléments de ressort exerçant une pression sur le joint à gel.

16. Dispositif selon l'une quelconque des revendications précédentes, dans lequel la zone de raccordement (126) destinée à établir un contact avec ledit au moins un câble (107) est configurée sous forme d'une zone de borne à vis.

17. Dispositif selon l'une quelconque des revendications 1 à 16, dans lequel la zone de raccordement (126) destinée à établir un contact avec ledit au moins un câble (107) est configurée sous forme d'une zone de raccordement chargée par ressort.
